# EUROPEAN PATENT APPLICATION

(11) **EP 4 162 996 A1**
(43) Date of publication of application: **12.04.2023**
(21) Application number: 21822798.1
(22) Date of filing: 03.06.2021
(51) Int. Cl.: A63F 13/795, A63F 13/30, A63F 13/533, A63F 13/86, A63F 13/87, G06F 13/00, H04N 7/15

(54) **INFORMATION PROCESSING DEVICE, AND IMAGE SHARING METHOD**

(30) Priority: 08.06.2020 JP 2020099643
(71) Applicant: Sony Interactive Entertainment Inc., Tokyo 108-0075 (JP)
(72) Inventor: SUZUKI, Shogo, Tokyo 108-0075 (JP); OIWA, Takuma, Tokyo 108-0075 (JP); HIRAKAWA, Hiroki, Tokyo 108-0075 (JP); TAKEUCHI, Masashi, Tokyo 108-0075 (JP); ADACHIHARA, Tadashi, Tokyo 108-0075 (JP); KAJIHATA, Hiroshi, Tokyo 108-0075 (JP)
(74) Representative: Müller Hoffmann & Partner
(86) International application number: PCT/JP2021/021157
(87) International publication number: WO 2021/251256

(57) **Abstract**

A transmission processing section 166a transmits an image to a distribution server. A state information acquisition section 164a acquires, from a management server, information indicating the states of a plurality of members. A room image generation section 124a generates, on the basis of the information indicating the state of the plurality of members, a member display field in which information regarding a member transmitting an image and information regarding a member transmitting no image are included in different regions. A room image generation section 124a displays information indicating a member who is watching an image transmitted from the transmission processing section 166a to the distribution server.

## Description

### [Technical Field]

The present disclosure relates to a technology for sharing an image among a plurality of users.

### [Background Art]

PTL 1 discloses an image sharing system in which, under an environment where a host user's information processing device and a guest user's information processing device are connected not via a server but by P2P (Peer to Peer), an image of a game that the host user is playing is shared with the guest user. In this image sharing system, a sharing mode (Share Screen) for allowing a guest user to watch a game image, a sharing mode (Hand over my controller) for allowing a guest user to play a game in the place of the host user, and a sharing mode (Hand over another controller) for allowing the guest user to participate as a new player in a game, and allowing the host user and the guest user to play the game together are prepared.

### [Citation List]

### [Patent Literature]

[PTL 1]
JP 2017-35298A

### [Summary]

### [Technical Problems]

A network service for games plays a role as a communication tool. For example, if a plurality of users participating in the same chat room share a game image, it is expected that more active communication can be established. Therefore, it is preferable to realize a mechanism for allowing a user who is playing a game to share an image of the game in progress with other users in a simple manner. Not only in a game but also in a network service such as a conference system to which a plurality of information processing devices connect, if a mechanism for sharing an image in a simple manner is realized, it is expected that smooth communication can be supported.

Therefore, an object of the present invention is to provide a technology that is useful to share an image.

### [Solution to Problems]

In order to solve the abovementioned problems, an information processing device according to a certain aspect of the present disclosure connects to a management server that manages states of a plurality of members participating in one room, and a distribution server that distributes an image, the information processing device including a transmission processing section that transmits an image to the distribution server, a state information acquisition section that acquires information indicating the states of the plurality of members from the management server, and a room image generation section that, on the basis of the information indicating the states of the plurality of members, generates a member displaying field in which information regarding a member transmitting an image and information regarding a member transmitting no image are included in different regions, in which the room image generation section displays information indicating a member who is watching an image transmitted from the transmission processing section to the distribution server.

Another aspect of the present disclosure is an image sharing method including a step of transmitting an image to a distribution server that distributes an image, a step of acquiring, from a management server that manages states of a plurality of members participating in one room, information indicating the states of the plurality of members, a step of displaying, on the basis of the information indicating the states of the plurality of members, a member displaying field in which information regarding a member transmitting an image and information regarding a member transmitting no image are included in different regions, and a step of displaying information indicating a member who is watching an image transmitted to the distribution server.

It is to be noted that a method, a device, a system, a recording medium, or a computer program that is obtained by translating any combination of the above constituent elements or an expression in the present disclosure, is also effective as an aspect of the present disclosure.

### [Brief Description of Drawings]

[FIG. 1]

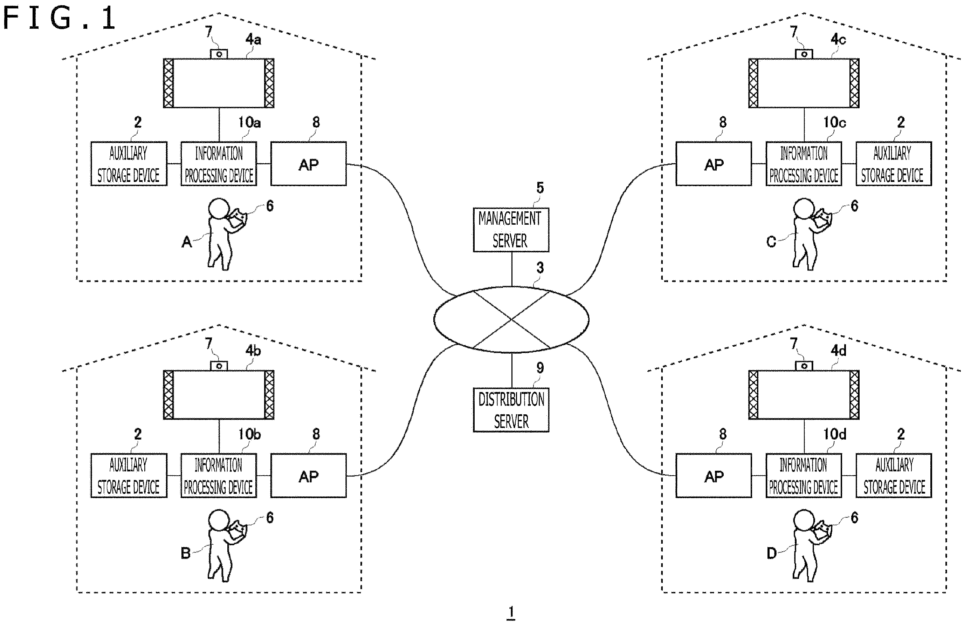

   FIG. 1 is a diagram depicting an image sharing system according to an embodiment of the present disclosure.
[FIG. 2]

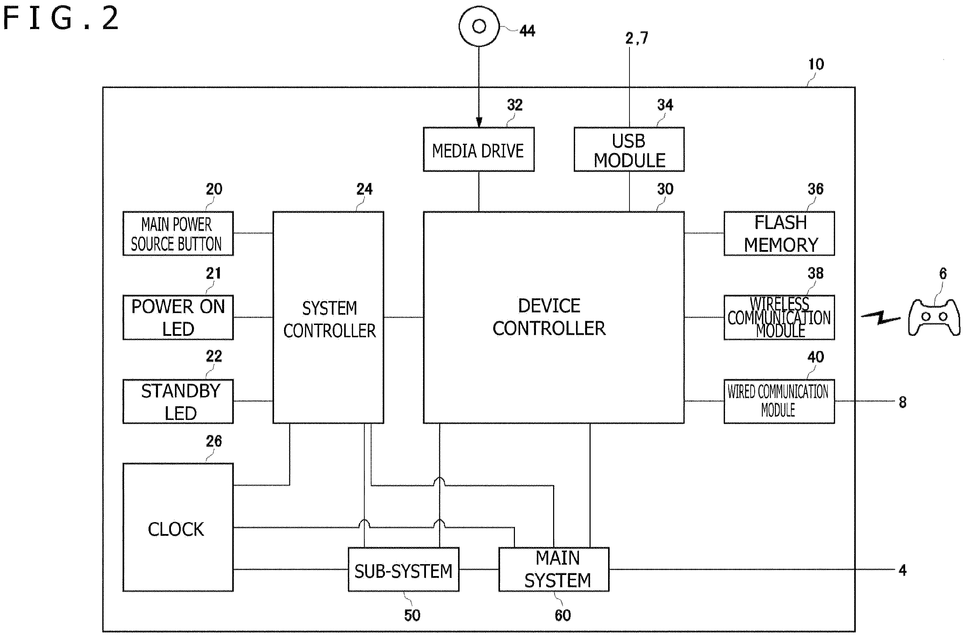

   FIG. 2 is a diagram depicting a hardware configuration of an information processing device.
[FIG. 3]

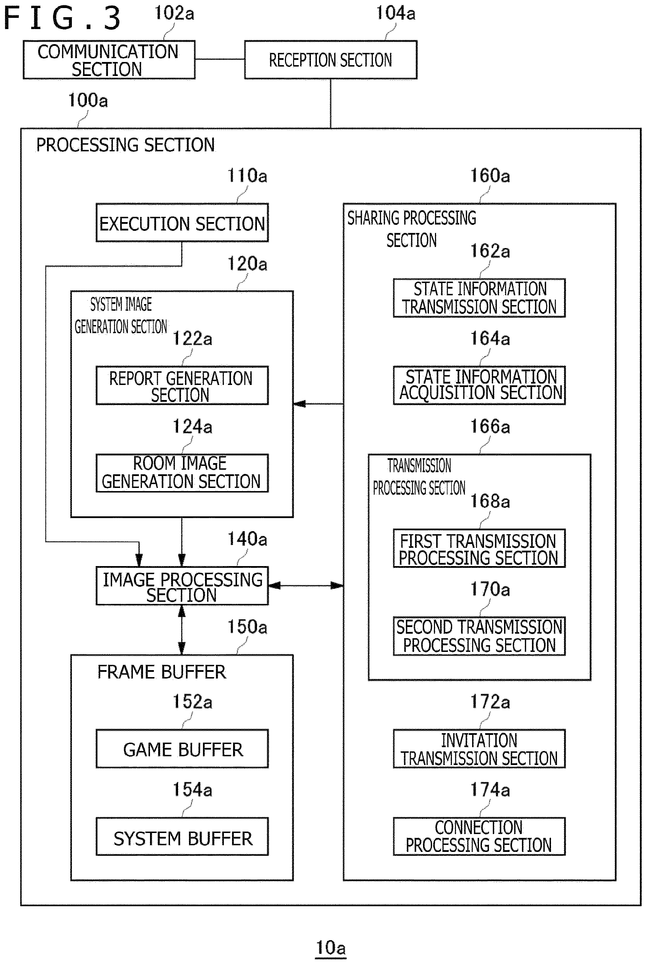

   FIG. 3 is a diagram depicting functional blocks of an information processing device that transmits a game image.
[FIG. 4]

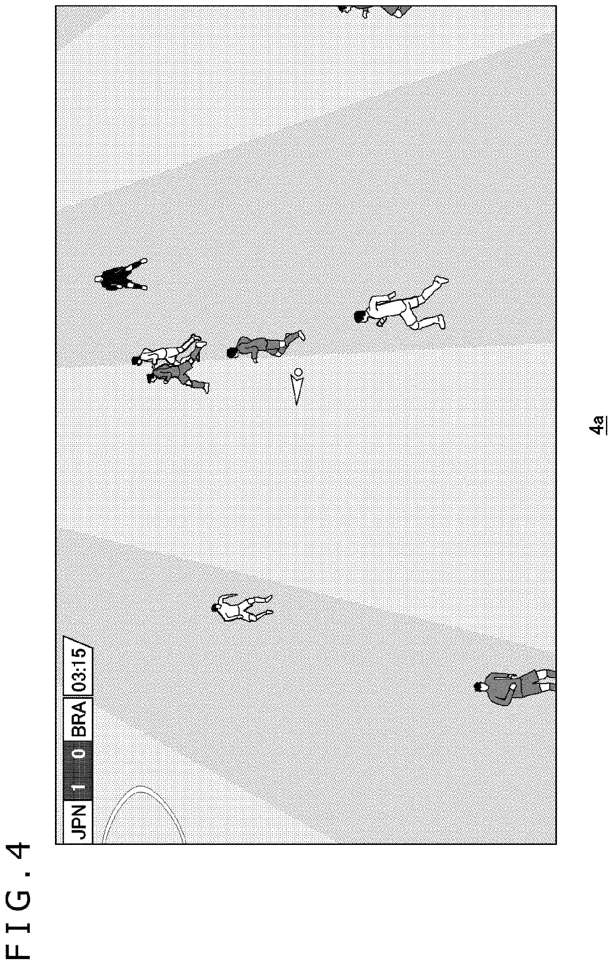

   FIG. 4 is a diagram depicting one example of a game screen.
[FIG. 5]

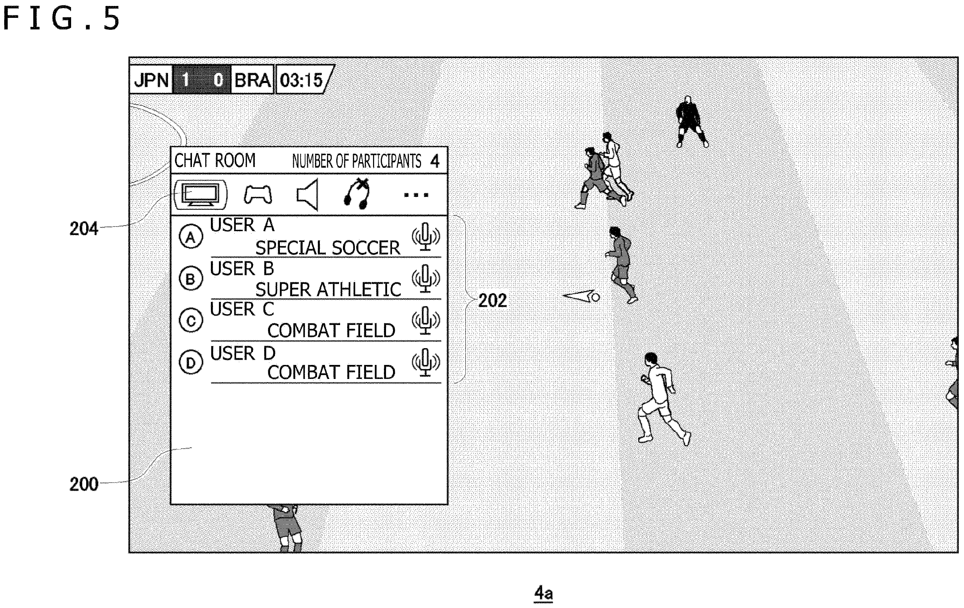

   FIG. 5 is a diagram depicting an example of a system image superimposed on a game image.
[FIG. 6]

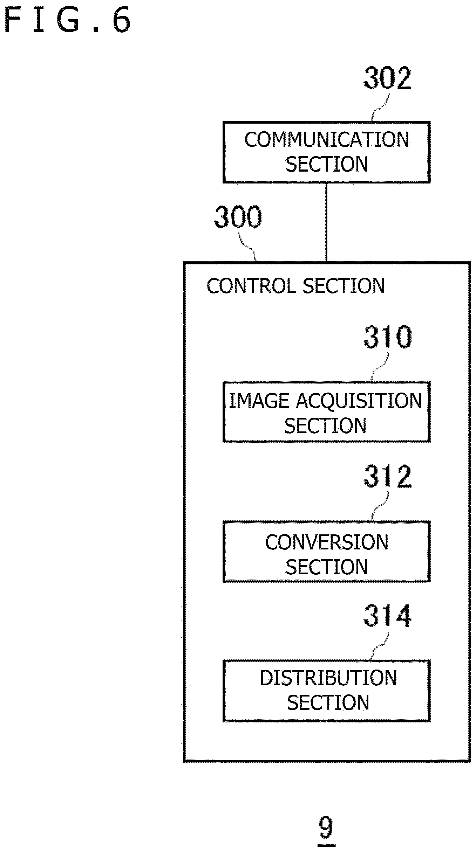

   FIG. 6 is a diagram depicting functional blocks of a distribution server.
[FIG. 7]

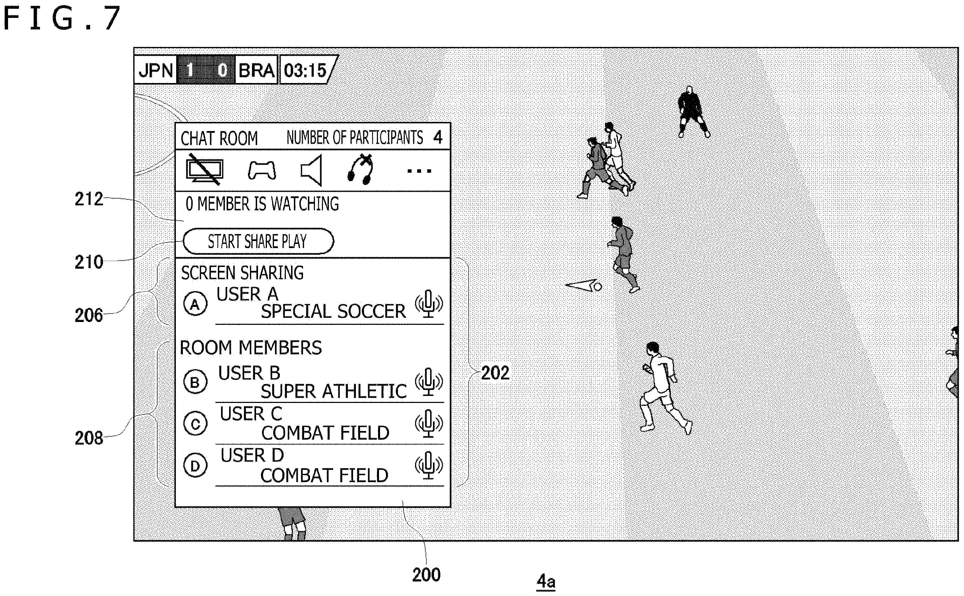

   FIG. 7 is a diagram depicting an example of a system image superimposed on a game image.
[FIG. 8]

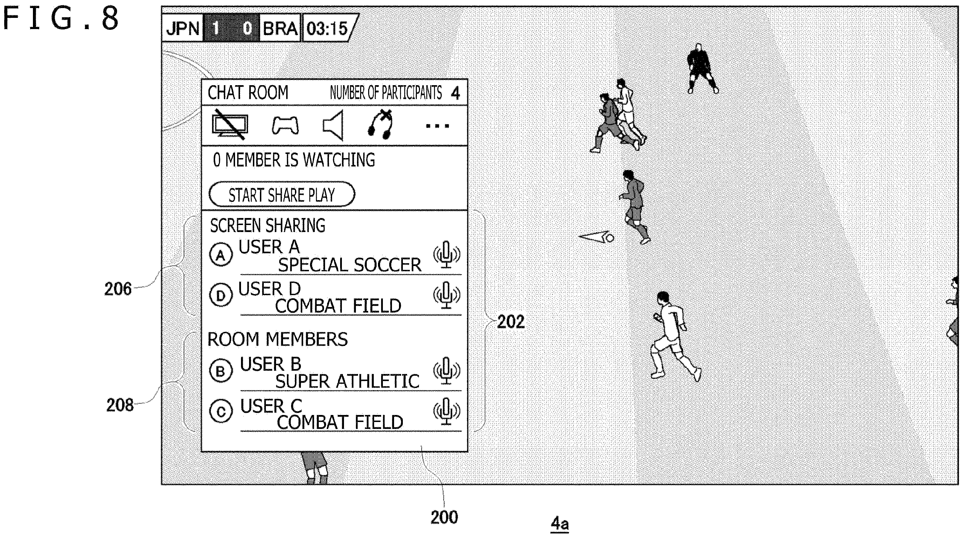

   FIG. 8 is a diagram depicting an example of a system image superimposed on a game image.
[FIG. 9]

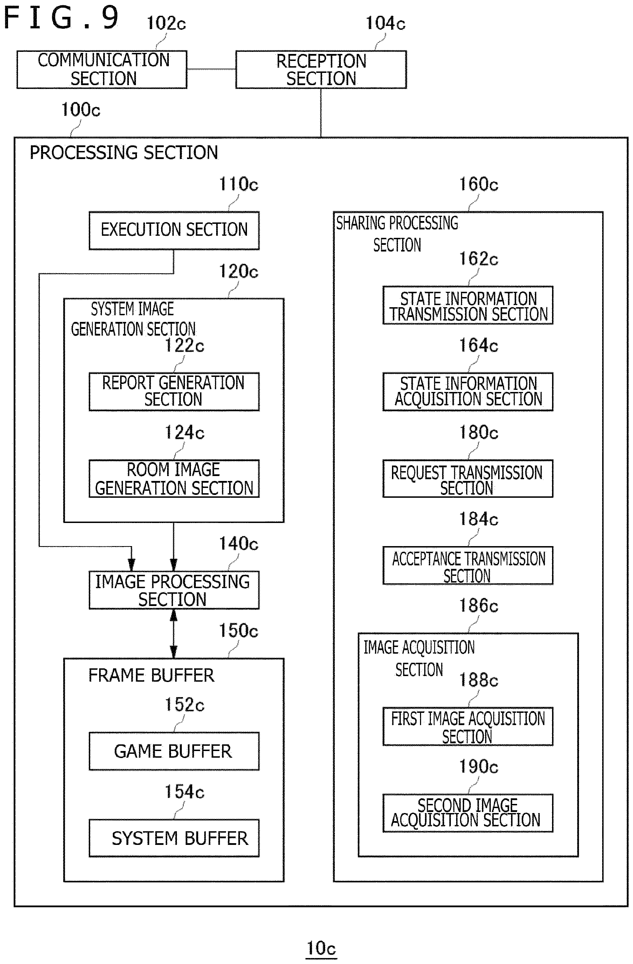

   FIG. 9 is a diagram depicting functional blocks of an information processing device that receives a game image under screen sharing.
[FIG. 10]

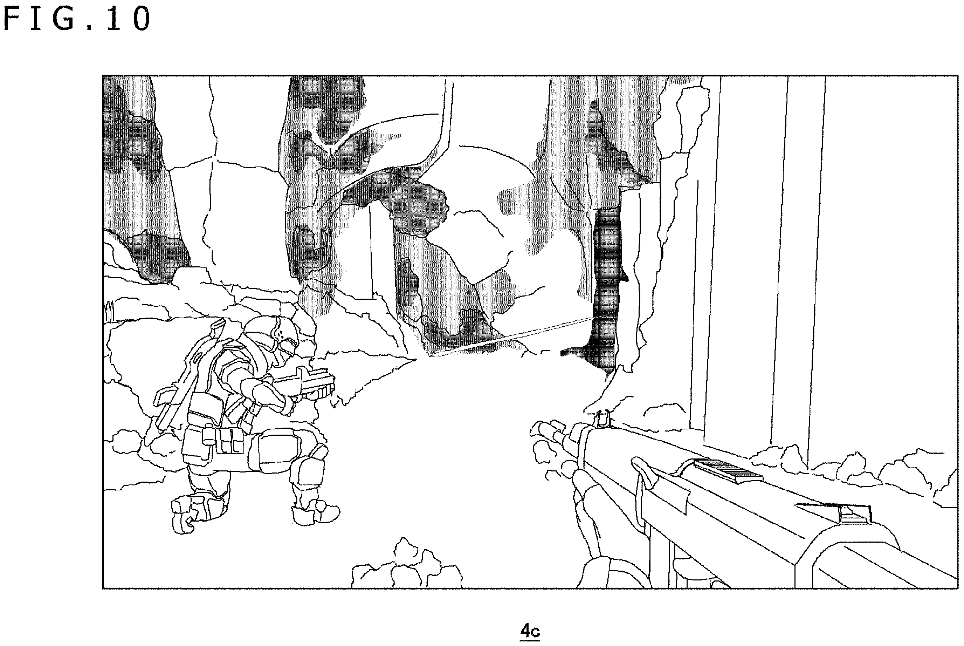

   FIG. 10 is a diagram depicting one example of a game screen displayed on an output device.
[FIG. 11]

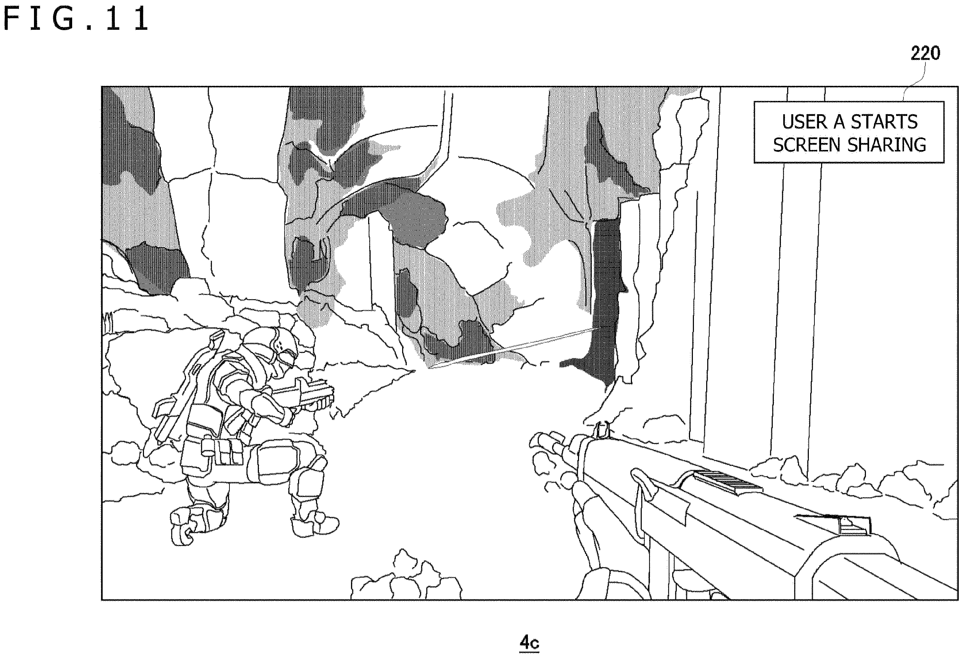

   FIG. 11 is a diagram depicting an example of a message displayed on an output device.
[FIG. 12]

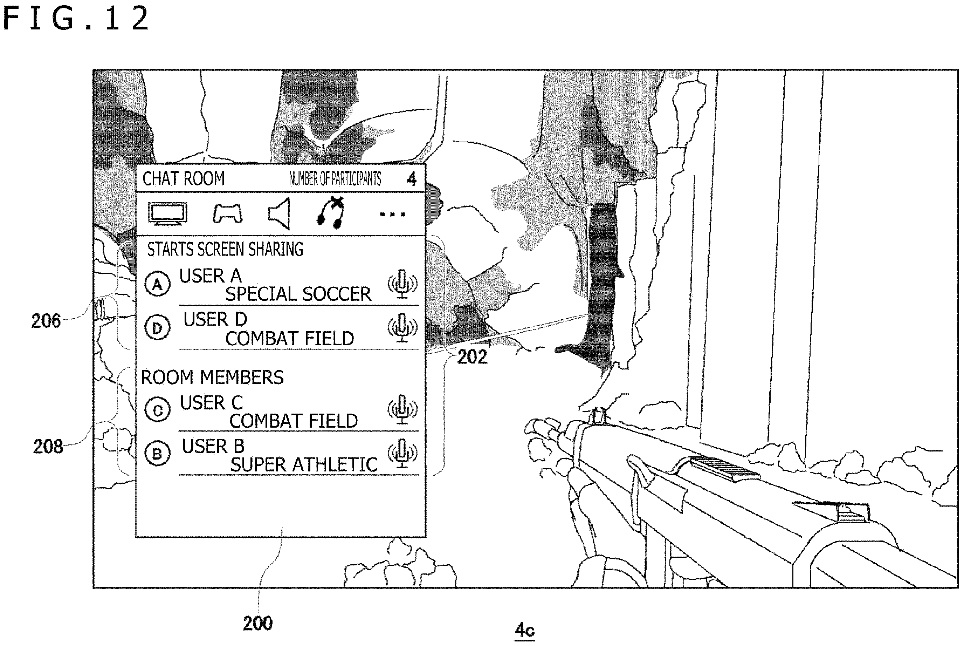

   FIG. 12 is a diagram depicting an example of a system image superimposed on a game image.
[FIG. 13]

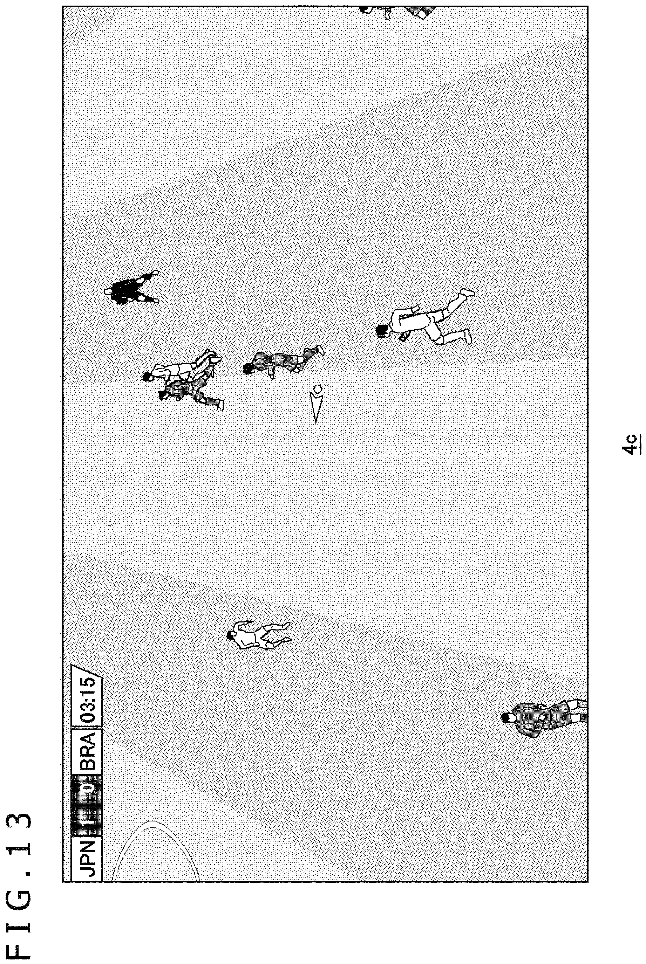

   FIG. 13 is a diagram depicting a display example in a full-screen display format.
[FIG. 14]

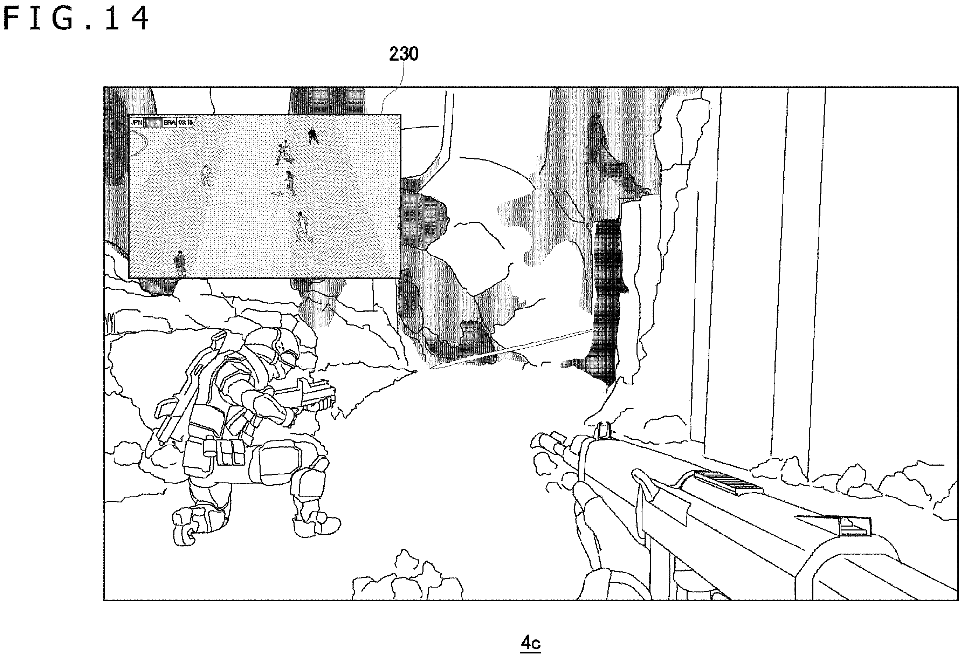

   FIG. 14 is a diagram depicting a display example in a picture-in-picture display form.
[FIG. 15]

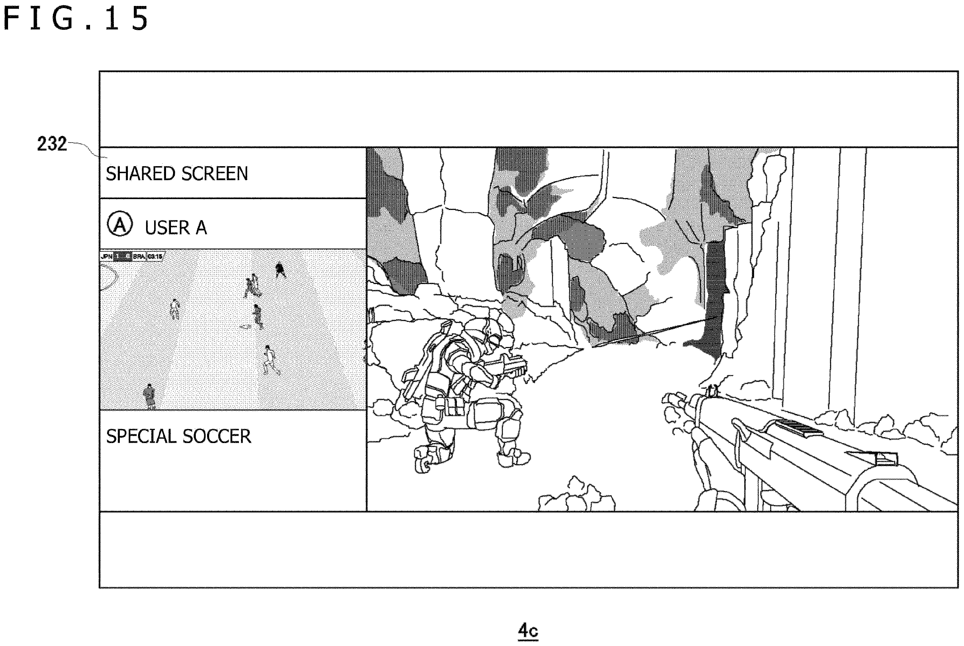

   FIG. 15 is a diagram depicting a display example in a split-screen display form.
[FIG. 16]

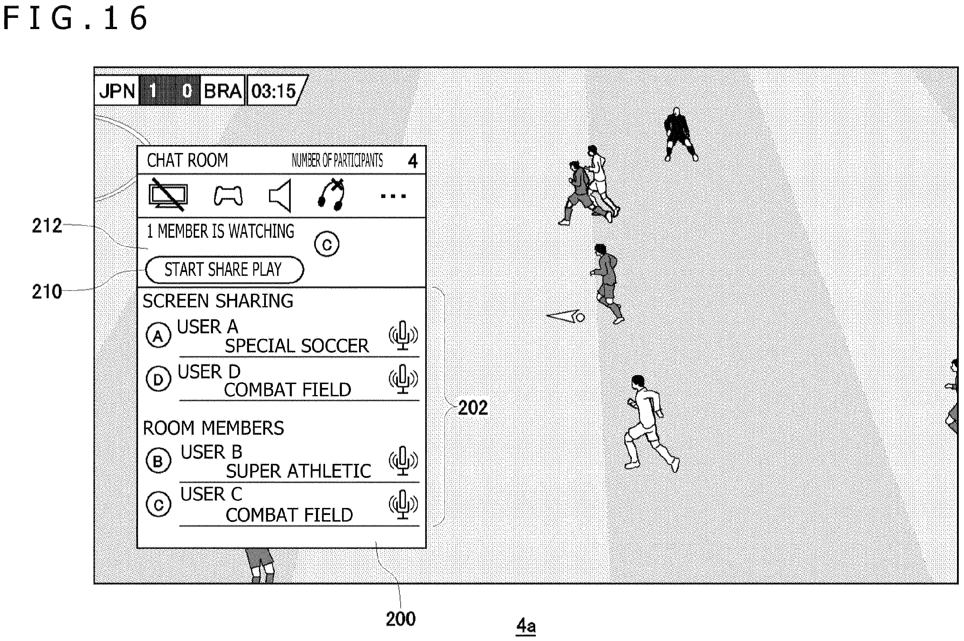

   FIG. 16 is a diagram depicting an example of a system image superimposed on a game image.
[FIG. 17]

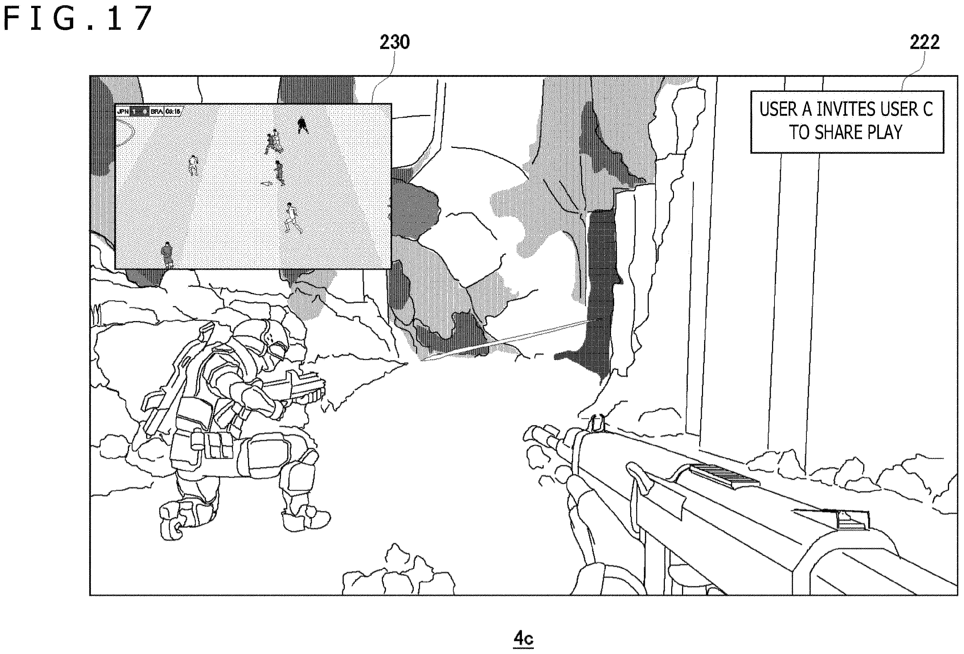

   FIG. 17 is a diagram depicting an example of a message displayed on an output device.
[FIG. 18]

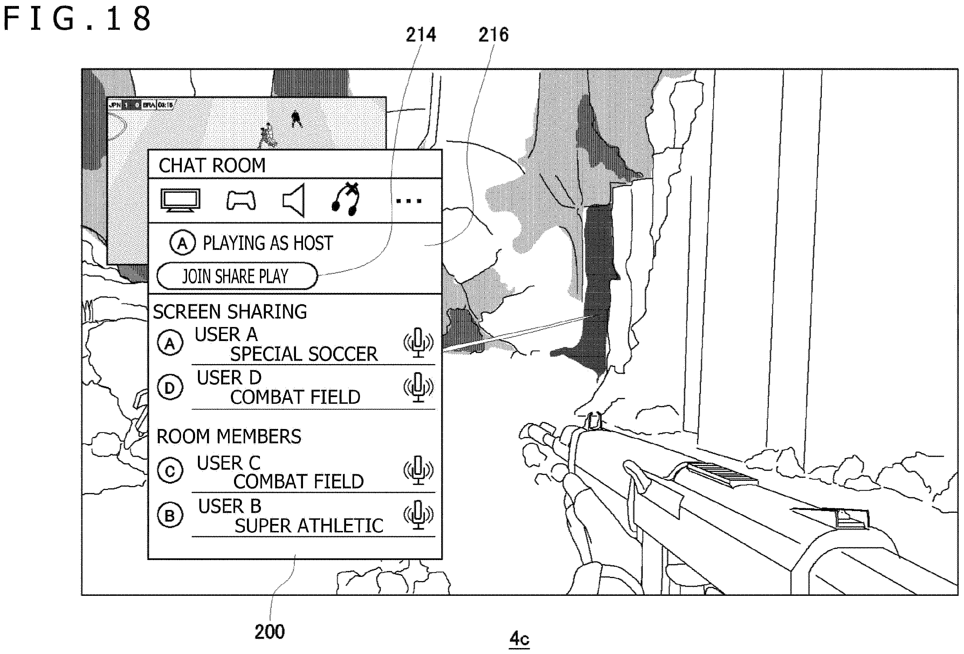

   FIG. 18 is a diagram depicting an example of a system image superimposed on a game image.
[FIG. 19]

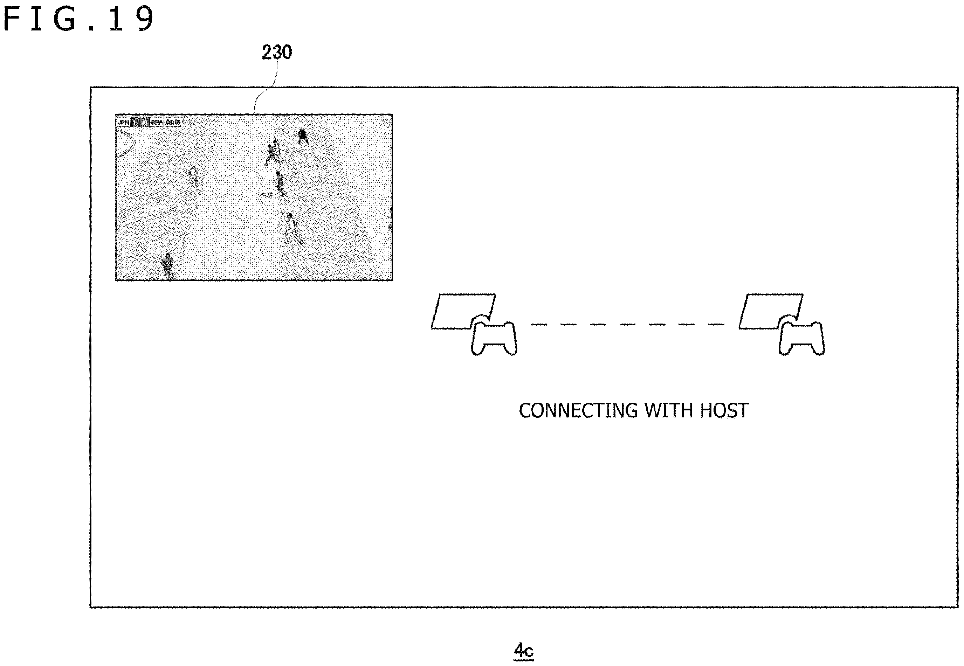

   FIG. 19 is a diagram depicting an example of a system image displayed on an output device.
[FIG. 20]

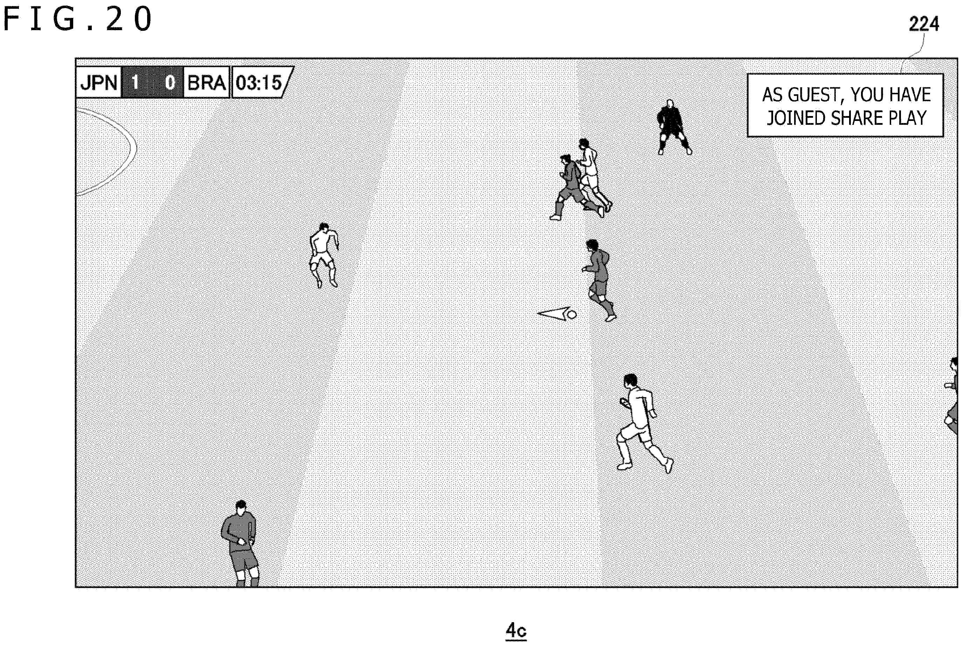

   FIG. 20 is a diagram depicting an image of a game that a user is playing.

### [Description of Embodiment]

FIG. 1 depicts an image sharing system 1 according to an embodiment of the present disclosure. The image sharing system 1 includes a plurality of information processing devices 10a, 10b, 10c, and 10d (hereinafter, referred to as an "information processing device 10" in a case in which they are not specifically distinguished from one another), a management server 5, and a distribution server 9, which are connected via a network 3 such as the internet or a LAN (Local Area Network).

The information processing devices 10a, 10b, 10c, and 10d are terminal devices that are operated by respective users, and connected to output devices 4a, 4b, 4c, and 4d (hereinafter, referred to as an "output device 4" in a case in which they are not specifically distinguished from one another). The output devices 4 may be televisions that have displays for outputting images and loudspeakers for outputting sounds, or may be head mounted displays. The output devices 4 may be connected to the respective information processing devices 10 via wired cables or wirelessly.

An access point (hereinafter, referred to as an "AP") 8 has a wireless access point function and a router function. Each information processing device 10 is connected to the corresponding AP 8 wirelessly or wiredly, and thus, is communicably connected to the management server 5, the distribution server 9, and the other information processing devices 10 on the network 3.

The information processing device 10 wirelessly or wiredly connects with an input device 6 being operated by a user. The input device 6 outputs operation information indicating a user operation result to the information processing device 10. The information processing device 10 receives the operation information from the input device 6, and reflects the operation information in processes of system software or application software so as to output the processing result through the output device 4. In the image sharing system 1, the information processing device 10 may be a game device that executes a game, and the input device 6 may be a device such as a game controller for supplying user operation information to the information processing device 10. The input device 6 may include a plurality of input parts including a plurality of push-type operation buttons, an analog stick through which an analog quantity can be inputted, and a turnable button.

An auxiliary storage device 2 is a storage such as an HDD (Hard Disk Drive) or an SSD (Solid-State Drive), and may be a built-in storage, or may be an external storage that is connected to the information processing device 10 through a USB (Universal Serial Bus) or the like. A camera 7 which is an image capturing device is disposed near the output device 4, and captures an image of the surrounding area of the output device 4.

In the image sharing system 1, users A, B, C, and D are room members who are in the same chat room. The users can have a text chat with one another, and can have a voice chat with one another if the users have headsets. The chat room is created and managed by the management server 5. The management server 5 receives chat data (text data and/or voice data) transmitted from each user, and transfers the chat data to the other users who are in the room. For example, the management server 5 transfers chat data transmitted from the user A to the users B, C, and D who are in the room.

In the chat room, each user can share an image of a game in progress with the other users. An upper limit may be placed on the number of users joining the chat room, but any limit is not necessarily placed on the number. It is to be noted that the chat room is one example of a virtual room or group where online users gather. Another type of a room or group may be used instead.

The management server 5 is maintained and managed by a management entity of the image sharing system 1, and provides network services including a chat service to users of the image sharing system 1. The management server 5 manages network accounts for identifying the respective users. By using a network account, a user signs in to a network service. After signing in to a network service, a user enters a chat room so as to be able to communicate with other room members. It is to be noted that, after signing in, the user can save data on a game in the management server 5, for example.

The distribution server 9 is maintained and managed by the management entity of the image sharing system 1, and provides a service for distributing streaming data on an image of a game being played by a user, to another user participating in the chat room. It is to be noted that the streaming data includes game sounds as a matter of course, but an explanation of distribution of the game sounds will be omitted. An explanation of distribution of game images will mainly be given hereinafter.

FIG. 2 depicts a hardware configuration of the information processing device 10. The information processing device 10 includes a main power source button 20, a power ON LED (Light-Emitting Diode) 21, a standby LED 22, a system controller 24, a clock 26, a device controller 30, a media drive 32, a USB module 34, a flash memory 36, a wireless communication module 38, a wired communication module 40, a sub-system 50, and a main system 60.

The main system 60 includes a main CPU (Central Processing Unit), a memory which is a main storage and a memory controller, a GPU (Graphics Processing Unit), etc. The GPU is mainly used for computation of a game program. These functions may be implemented by a system-on-a-chip, and may be formed on one chip. The main CPU has a function for executing a game program recorded in the auxiliary storage device 2 or a ROM (Read-Only Memory) medium 44.

The sub-system 50 is equipped with a sub-CPU, a memory which is a main storage, and a memory controller, etc., but is not equipped with a GPU, and thus, does not have a function of executing a game program. The number of circuit gates in the sub-CPU is less than that in the main CPU. Operation power consumption in the sub-CPU is smaller than that in the main CPU.

The main power source button 20 is an input part through which a user operation is inputted. The main power source button 20 is disposed on a front surface of a casing of the information processing device 10, and is operated to turn on/off a power supply to the main system 60 of the information processing device 10. The power ON LED 21 is lit when the main power source button 20 is on. The standby LED 22 is lit when the main power source button 20 is off.

The system controller 24 detects that a user depresses the main power source button 20. When the main power source button 20 is depressed while the main power source is in the OFF state, the system controller 24 regards the depression operation as an "ON instruction." On the other hand, when the main power source button 20 is depressed while the main power source is in the ON state, the system controller 24 regards the depression operation as an "OFF instruction."

The clock 26, which is a real-time clock, generates current date and time information, and supplies the information to the system controller 24, the sub-system 50, and the main system 60. The device controller 30 is formed as an LSI (Large-Scale Integrated Circuit) that, like a south bridge, conducts information exchange between devices. As depicted in the drawing, devices such as the system controller 24, the media drive 32, the USB module 34, the flash memory 36, the wireless communication module 38, the wired communication module 40, the sub-system 50, and the main system 60 are connected to the device controller 30. The device controller 30 absorbs the difference in electric characteristics and the difference in data transfer speeds among the devices, and controls data transfer timings.

The media drive 32 is driven with the ROM medium 44 attached thereto. Application software for games or the like, and license information are recorded in the ROM medium 44. The media drive 32 reads out a program and data, etc., from the ROM medium 44. The ROM medium 44 may be a read-only recording medium such as an optical disc, a magneto-optical disc, or a Blue-ray disc.

The USB module 34 is connected to an external device via a USB cable. The USB module 34 may be connected to the auxiliary storage device 2 and the camera 7 via USB cables. The flash memory 36 is an auxiliary storage constituting an internal storage. The wireless communication module 38 wirelessly communicates with the input device 6, for example, according to a communication protocol such as the Bluetooth (registered trademark) protocol or the IEEE (Institute of Electrical and Electronics Engineers)802.11 protocol. The wired communication module 40 performs wired communication with an external device to connect to the network 3 via the AP 8.

In the image sharing system 1, chat room members are allowed to use three sharing modes in order to share game images. Hereinafter, a user who distributes a game image is referred to as a "host" or a "host user," and a user who receives distribution of a game image is referred to as a "guest" or a "guest user."

### <First Sharing Mode>

In the first sharing mode, a guest user watches a game image of a host user. This is called "screen sharing." In screen sharing, a game image of a host user is shared with a guest user via the distribution server 9. That is, the host user's information processing device 10 transmits a game image to the distribution server 9, and the guest user's information processing device 10 receives the game image from the distribution server 9. The guest user is allowed to watch the game image of the host user but is not allowed to perform an operation in the game.

### <Second Sharing Mode>

In the second sharing mode, a guest user plays a game instead of a host user while watching a game image of the host user. This is called "assist play." In assist play, a game image of a host user is shared with a guest user not via the distribution server 9. That is, P2P connection between the host user's information processing device 10 and the guest user's information processing device 10 is established, so that the game image is shared. The host user cannot perform an operation in the game while only the guest user is allowed to perform an operation in the game because the host user gives a game operation authority to the guest user.

### <Third Sharing Mode>

In the third sharing mode, a guest user joins a game as a new player to play the game in collaboration with a host user, while watching a game image of the host user. This is called "collaboration play." In collaboration play, a game image of a host user is shared with a guest user not via the distribution server 9. That is, P2P connection between the host user's information processing device 10 and the guest user's information processing device 10 is established, so that the game image is shared. In collaboration play, the guest user also uses a game resource that is on the host user-side, and the host user and the guest user become a player 1 and a player 2, respectively, to participate in the game, so that the host user and the guest user are allowed to perform operations in the game in collaboration with each other.

In the second and third sharing modes, P2P connection between the host user's information processing device 10 and the guest user's information processing device 10 is established, so that a game image is shared, and at least the guest user has a gameplay authority. Since the guest user is allowed to play a game in the second and third sharing modes, the second and third sharing modes are collectively called "share play" in some cases.

One user becomes a host user when distributing an image of a game that the user is playing, and further, becomes a guest user when watching an image of a game that another person is playing. Accordingly, one information processing device 10 includes both a transmission-side configuration to become a host user and a reception-side configuration to become a guest user. Hereinafter, for convenience of explanation, it is assumed that a user A's information processing device 10a has the transmission-side configuration to transmit game images and a user C's information processing device 10c has the reception-side configuration to receive game images such that game images are shared. However, it should be understood that both the transmission-side configuration and the reception-side configuration are installed in each information processing device 10.

FIG. 3 depicts functional blocks of the information processing device 10a that transmits an image of a game that the user A is playing. The information processing device 10a includes a processing section 100a, a communication section 102a, and a reception section 104a. The processing section 100a includes an execution section 110a, a system image generation section 120a, an image processing section 140a, a frame buffer 150a, and a sharing processing section 160a.

The system image generation section 120a includes a report generation section 122a and a room image generation section 124a. The frame buffer 150a includes a game buffer 152a that temporarily stores game image data and a system buffer 154a that temporarily stores system image data. The sharing processing section 160a includes a state information transmission section 162a, a state information acquisition section 164a, a transmission processing section 166a, an invitation transmission section 172a, and a connection processing section 174a. The transmission processing section 166a includes a first transmission processing section 168a and a second transmission processing section 170a.

In FIG. 3, each of the elements which are illustrated as functional blocks for performing various processes can be formed by a circuit block, a memory, and any other LSI in terms of hardware, and can be implemented by system software or a game program loaded in a memory in terms of software. Therefore, a person skilled in the art will understand that these functional blocks can be implemented in various configurations such as a configuration including hardware only, a configuration including software only, and a combination thereof. No particular limitation is placed on implementation of the functional blocks.

The communication section 102a receives operation information on an operation performed by the user A on an input part of the input device 6. In addition, the communication section 102a receives, from the management server 5, chat data on other room members in the chat room, and further receives information indicating the states of the other room members.

The communication section 102a transmits information indicating the state of the user A to the management server 5. In addition, the communication section 102a transmits streaming data on game images and game sounds generated by the processing section 100a, to the distribution server 9 and/or a separate information processing device 10. Hereinafter, streaming data for reproducing a game image may be simply referred to as a game image. The functional block which is the communication section 102a is illustrated as a configuration having both the function of the wireless communication module 38 and the function of the wired communication module 40 in FIG. 2.

The reception section 104a is disposed between the communication section 102a and the processing section 100a, and exchanges data or information with the communication section 102a and the processing section 100a. When receiving the operation information from the input device 6 via the communication section 102a, the reception section 104a supplies the operation information to a prescribed functional block in the processing section 100a.

The execution section 110a executes a game program (hereinafter, simply referred to as a "game" in some cases). The functional block which is indicated as the execution section 110a herein is implemented by software such as system software or game software, or hardware such as a GPU. The execution section 110a executes the game program to generate game image data and game sound data. It is to be noted that a game is one example of an application, and the execution section 110a may execute any application that is not a game.

During a gameplay of the user A, the execution section 110a executes the game program, and conducts computation for producing motion of a game character in a virtual space on the basis of operation information inputted to the input device 6 by the user A. After receiving the computation result in the virtual space, the GPU generates game image data based on a viewpoint (virtual camera) in the virtual space.

FIG. 4 depicts one example of a game screen displayed on the output device 4a of the user A. The user A is playing a game title "special soccer." The execution section 110a generates game image data, and supplies the game image data to the image processing section 140a. Then, the image processing section 140a temporarily stores the game image data in the game buffer 152a, and generates a display image from the image data temporarily stored in the frame buffer 150a, and provides the display image to the output device 4a. Accordingly, the output device 4a outputs the game image. It is to be noted that, in actuality, the output device 4a additionally outputs a game sound generated by the execution section 110a, and the user A operates the input device 6 to play the game title "special soccer" while watching the game image and listening to the game sound outputted from the output device 4a.

In the sharing processing section 160a, the state information transmission section 162a transmits information indicating the state of the user A to the management server 5. The information indicating the state includes information indicating whether or not the user is playing a game, and further, if the user is playing the game, includes information indicating the title of the game, the on/off state of a microphone, and information regarding image sharing. The information regarding image sharing includes information regarding the user A as a host user and information regarding the user A as a guest user. The information regarding the user A as a host user includes information indicating that the user A starts screen sharing (first sharing mode), and information indicating that an invitation to assist play (second sharing mode) or collaboration play (third sharing mode) is sent to a room member. The information regarding the user A as a guest user includes information regarding the sharing mode of a game image distributed by another room member. Specifically, to allow another room member to watch an image distributed by the distribution server 9, the state information transmission section 162a transmits information indicating that the image is to be watched to the management server 5. To accept an invitation to assist play or collaboration play from another room member, the state information transmission section 162a transmits information indicating acceptance of the invitation to the management server 5.

The function of the state information transmission section 162a is also installed in each of the information processing devices 10b to 10d of the users B to D. Therefore, the information processing device 10 of each user transmits information indicating the state of the user to the management server 5. It is preferable that, when the state changes, the information processing device 10 immediately transmits information indicating the change to the management server 5. The management server 5 acquires information indicating the states of the users from the respective information processing devices 10, and manages the respective current states of the users. The management server 5 transmits the information indicating the users to the information processing devices 10 belonging to the same chat group. The state information acquisition section 164a of the information processing device 10a acquires the information indicating the respective states of the users.

The information processing device 10 according to the embodiment provides a mechanism for allowing the user A who is playing a game to share an image in a simple manner. When the user A shortly depresses a prescribed button on the input device 6 during a gameplay, the reception section 104a receives the button operation, and supplies the operation information to the system image generation section 120a. The system image generation section 120a acquires the button operation information as a system-image display request, and calls the state information acquisition section 164a.

The state information acquisition section 164a acquires the information indicating the states of the users from the management server 5, and provides the information to the system image generation section 120a. In the system image generation section 120a, the room image generation section 124a generates system image data indicating the state of the chat room that the user A is participating in, and supplies the system image data to the image processing section 140a. The image processing section 140a temporarily stores the system image data in the system buffer 154a, and generates a display image from the image data temporarily stored in the frame buffer 150a, and provides the display image to the output device 4a. Specifically, the image processing section 140a generates a display image by combining the game image data temporarily stored in the game buffer 152a and the system image data temporarily stored in the system buffer 154a, and provides the generated display image to the output device 4a. Accordingly, the output device 4a outputs the display image in which the system image is superposed on the game image.

FIG. 5 depicts an example of a system image 200 superimposed on a game image. The room image generation section 124a generates system image data on the basis of the information indicating the states of the users acquired by the state information acquisition section 164a. A member displaying field 202 for indicating the states of the members in the chat room that the user A is participating in is provided in the system image 200. The room image generation section 124a generates, on the basis of the information indicating the states of a plurality of room members (users), the member displaying field 202 in which information regarding the members is included. In the member displaying field 202 depicted in FIG. 5, information indicating icons of the users, the user names, and the title of a game in progress, and whether the microphones are on/off is displayed. Information indicating whether or not share play is under execution may be additionally included in the member displaying field 202.

A sharing start button 204 is an operation element for allowing the user A to start screen sharing which is the first sharing mode. When the user A operates the sharing start button 204, the state information transmission section 162a transmits information indicating that the user A starts screen sharing (first sharing mode) to the management server 5 and the distribution server 9. Then, the first transmission processing section 168a transmits, to the distribution server 9, streaming data on a game image that the image processing section 140a has read from the game buffer 152a. As explained above, the streaming data includes game sound data. The first transmission processing section 168a compresses the streaming data in a prescribed format, and transmits the compressed data to the distribution server 9.

Here, the image processing section 140a reads out only game image data temporarily stored in the game buffer 152a, and provides the game image data to the first transmission processing section 168a, and thus, refrains from combining system image data temporarily stored in the system buffer 154a with the game image data. As a result, image data to be distributed does not include the system image data, so that the game image data alone can be distributed.

The first transmission processing section 168a decides the resolution of game image data to be transmitted to the distribution server 9, according to the quality of the connection state between the communication section 102a and the distribution server 9. That is, if the connection state is poor, the first transmission processing section 168a decides to reduce the resolution of the game image data. It is to be noted that the execution section 110a generates game image data at a frame rate of 60 fps (frame/sec) or 30 fps, but the first transmission processing section 168a may reduce the frame rate as well as the resolution if the connection state with respect to the distribution server 9 is significantly poor.

In a case where game image data having a resolution of 1080p is temporarily stored in the game buffer 152a, the image processing section 140a supplies the game image data having a resolution of 1080p to the first transmission processing section 168a if the connection state is good. However, the image processing section 140a needs to reduce the resolution of the game image if the connection state is not good. The image processing section 140a reduces the resolution to 720p when it is difficult to transmit the game image having a resolution of 1080p. The image processing section 140a reduces the resolution to 540p when it is difficult to transmit the game image having a resolution of 720p. The image processing section 140a reduces the resolution to 360p when it is difficult to transmit the game image having a resolution of 540p.

The first transmission processing section 168a determines the quality of the connection state between the communication section 102a and the distribution server 9, and gives a request for conversion to a game image resolution that is appropriate for the quality to the image processing section 140a. Accordingly, the image processing section 140a reconfigures the game image data at the requested resolution, and the first transmission processing section 168a transmits the reconfigured game image data to the distribution server 9. It is to be noted that the first transmission processing section 168a may constantly monitor the connection state, and, if the connection state changes, the first transmission processing section 168a may give an instruction on a resolution that is appropriate for the change to the image processing section 140a.

FIG. 6 depicts functional blocks of the distribution server 9. The distribution server 9 includes a control section 300 and a communication section 302. The control section 300 includes an image acquisition section 310, a conversion section 312, and a distribution section 314. The distribution section 314 holds information on chat room members, and distributes a game image to the information processing devices 10 of a certain member in the same chat room when receiving a watch request from the member.

In FIG. 6, each of the elements illustrated as functional blocks for performing various processes can be formed by a circuit block, a memory, and any other LSI in terms of hardware, and can be implemented by system software or a game program loaded in a memory in terms of software. Therefore, a person skilled in the art will understand that these functional blocks can be implemented in various configurations such as a configuration including hardware only, a configuration including software only, and a combination thereof. No particular limitation is placed on implementation of the functional blocks.

The image acquisition section 310 acquires image data transmitted by streaming from the information processing device 10a. The resolution of the image data is dynamically set according to the connection state between the information processing device 10a and the distribution server 9. Here, it is assumed that game image data is transmitted at a resolution of 1080p/60 fps from the information processing device 10. The conversion section 312 transcodes the acquired image data into image data at some transcodable resolutions. Specifically, the conversion section 312 transcodes the acquired image data into image data at resolutions that are lower than the resolution of the original image data.

The conversion section 312 according to the embodiment has a function of converting image data to resolutions of 720p, 540p, and 360p. The conversion section 312 converts the resolution of image data acquired by the image acquisition section 310 to lower resolutions. Therefore, when the image acquisition section 310 acquires image data of 1080p, the conversion section 312 converts the image data of 1080p to image data of 720p, image data of 540p, and image data of 360p.

It is to be noted that, when the image acquisition section 310 acquires image data of 720p, the conversion section 312 converts the image data of 720p to image data of 540p and image data of 360p. When the image acquisition section 310 acquires image data of 540p, the conversion section 312 converts the image data of 540p to image data of 360p. Irrespective of whether or not to distribute image data, the conversion section 312 executes this conversion, and waits for a watching request from the other members in the same chat room.

FIG. 7 depicts an example of the system image 200 superimposed on a game image of the user A. The room image generation section 124a generates system image data on the basis of information indicating the states of users acquired by the state information acquisition section 164a. Compared to the situation in which the system image 200 is displayed in FIG. 5, the user A himself/herself starts screen sharing in the chat room. It is to be noted that, since the information processing device 10a side can recognize that the user A has started screen sharing, the state information acquisition section 164a may acquire information indicating the state of the user A as internal information in the sharing processing section 160a.

The room image generation section 124a generates, on the basis of the information regarding the states of a plurality of users, the member displaying field 202 in which information regarding a user transmitting an image and information regarding a user transmitting no image are included in different regions. In an example indicated in FIG. 7, a host display region 206 where information regarding a user transmitting an image is displayed and a non-host display region 208 where information regarding a user transmitting no image is displayed are provided in the system image 200. The host display region 206 and the non-host display region 208 are distinguishably provided as different regions, as depicted in FIG. 7. Accordingly, the user A can easily discern which member is performing screen sharing and which member is not performing screen sharing. It is preferable that the host display region 206 is positioned above the non-host display region 208 so that the user A can preferentially see information in the host display region 206 because the display region of the system image 200 is limited.

A watching member display region 212 is a region of displaying room members who are watching a game image under screen sharing by the user A. In the situation depicted in FIG. 7, none of the members is watching the game image of the user A.

A share-play start button 210 is an operation element for allowing the user A to start share play which is the second sharing mode or the third sharing mode. The room image generation section 124a adds, to the system image 200, the share-play start button 210 for performing an operation to invite a room member to a game in progress and under screen sharing. When the user A operates the share-play start button 210, a window for inviting the other room members to share play is displayed, so that the user A can select a room member to be invited.

FIG. 8 depicts an example of the system image 200 superimposed on a game image of the user A. Compared with the system image 200 in FIG. 7, information indicating the user D is placed in the host display region 206. This shows that the user D is performing screen sharing. Since the host display region 206 where information regarding a user transmitting an image is displayed and the non-host display region 208 where information regarding a user transmitting no image is displayed are provided in the system image 200, the user A can easily discern which member is performing screen sharing and which member is not performing screen sharing.

FIG. 9 depicts functional blocks of the information processing device 10c that receives a game image under screen sharing. The information processing device 10c includes a processing section 100c, a communication section 102c, and a reception section 104c. The processing section 100c includes an execution section 110c, a system image generation section 120c, an image processing section 140c, a frame buffer 150c, and a sharing processing section 160c.

The system image generation section 120c includes a report generation section 122c and a room image generation section 124c. The frame buffer 150c includes a game buffer 152c that temporarily stores game image data, and a system buffer 154c that temporarily stores system image data. The sharing processing section 160c includes a state information transmission section 162c, a state information acquisition section 164c, a request transmission section 180c, an acceptance transmission section 184c, and an image acquisition section 186c. The image acquisition section 186c includes a first image acquisition section 188c and a second image acquisition section 190c.

In FIG. 9, each of the elements illustrated as functional blocks for performing various processes can be formed by a circuit block, a memory, and any other LSI in terms of hardware, and can be implemented by system software or a game program loaded in a memory in terms of software. Therefore, a person skilled in the art will understand that these functional blocks can be implemented in various configurations such as a configuration including hardware only, a configuration including software only, and a combination thereof. No particular limitation is placed on implementation of the functional blocks. A section in FIG. 9 may be identical to that in FIG. 3 if they have the same name.

The communication section 102c receives operation information regarding an operation that the user C has performed on an input part of the input device 6. In addition, the communication section 102c receives chat data made by the other room members in the chat room from the management server 5, and further receives information indicating the states of the other room members. In addition, the communication section 102c receives streaming data on a game image from the distribution server 9 and/or another information processing device 10. In addition, the communication section 102c transmits information indicating the state of the user C to the management server 5. The functional block which is the communication section 102c is illustrated as a configuration having the functions of both the wireless communication module 38 and the wired communication module 40 in FIG. 2.

The reception section 104c is provided between the communication section 102c and the processing section 100c, and exchanges data or information between the communication section 102c and the processing section 100c. When receiving operation information regarding an operation performed on the input device 6 via the communication section 102c, the reception section 104c supplies the operation information to a prescribed functional block of the processing section 100c.

The execution section 110c executes a game program. Here, the functional block which is illustrated as the execution section 110c is implemented by software such as system software or game software, or by hardware such as a GPU. By executing the game program, the execution section 110c generates game image data and game sound data. It is to be noted that a game is one example of an application, and the execution section 110c may execute any application that is not a game.

During a gameplay of the user C, the execution section 110c executes the game program, and conducts computation for producing motion of a game character in a virtual space on the basis of operation information inputted to the input device 6 by the user C. After receiving the computation result in the virtual space, the GPU generates game image data based on a viewpoint (virtual camera) in the virtual space.

FIG. 10 depicts one example of a game screen displayed on the output device 4c of the user C. The user C is playing a game title "combat field." The execution section 110c generates game image data, and supplies the game image data to the image processing section 140c. Then, the image processing section 140c temporarily stores the game image data in the game buffer 152c, and generates a display image from the image data temporarily stored in the frame buffer 150c, and provides the display image to the output device 4c. Accordingly, the output device 4c outputs the game image. It is to be noted that, in actuality, the output device 4c further outputs a game sound generated by the execution section 110c, and the user C operates the input device 6 to play the game title "combat field" while watching the game image and listening to the game sound outputted from the output device 4c.

In the sharing processing section 160c, the state information transmission section 162c transmits information indicating the state of the user C to the management server 5. The information indicating the state includes information indicating whether or not the user is playing a game, and further, if the user is playing the game, includes information indicating the title of the game and the on/off state of a microphone, and information regarding image sharing. The information regarding image sharing includes information regarding the user C as a host user and information regarding the user C as a guest user. The information regarding the user C as a host user includes information indicating that the user C starts screen sharing (first sharing mode), and information indicating that an invitation to assist play (second sharing mode) or collaboration play (third sharing mode) is sent to room members. The information regarding the user C as a guest user includes information regarding the sharing mode of a game image distributed by another room member. Specifically, to allow another room member to watch an image distributed by the distribution server 9, the state information transmission section 162c transmits information indicating that the image is to be watched to the management server 5. To accept an invitation to assist play or collaboration play from another room member, the state information transmission section 162c transmits information indicating acceptance of the invitation to the management server 5.

Here, operation of the information processing device 10c when a room member other than the user C starts screen sharing will be explained. With reference to FIG. 5, when the user A operates the sharing start button 204, the state information transmission section 162a of the information processing device 10a transmits information indicating that the user A starts screen sharing (first sharing mode) to the management server 5 and the distribution server 9. Further, the first transmission processing section 168a transmits, to the distribution server 9, streaming data on a game image that the image processing section 140a has read from the game buffer 152a. After the user A starts screen sharing, the management server 5 sends a report indicating that the user A has started screen sharing, to the information processing devices 10b, 10c, and 10d of the users B, C, and D who are the other room members in the chat room.

FIG. 11 depicts an example of a message 220 which is displayed on the output device 4c of the user C. The report generation section 122c generates system image data including the message 220 on the basis of a report sent from the management server 5, and supplies the system image data to the image processing section 140c. The image processing section 140c temporarily stores the system image data in the system buffer 154c, and generates a display image from the image data temporarily stored in the frame buffer 150c, and provides the display image to the output device 4c. Specifically, the image processing section 140c generates the display image by combining the game image data temporarily stored in the game buffer 152c with the system image data temporarily stored in the system buffer 154c, and provides the display image to the output device 4c. Accordingly, the output device 4c outputs a display image in which the system image is superimposed on the game image. The user C sees the message 220, and recognizes that the user A has started screen sharing. It is to be noted that the report generation section 122c may perform a sound output to inform the user C that the user A has started screen sharing.

When the user C depresses a prescribed button on the input device 6 while the message 220 is displayed, the request transmission section 180c sends a watching request including information for identifying the user A to the management server 5. It is to be noted that the request transmission section 180c may send a watching request including information for identifying the user A to the distribution server 9.

It is to be noted that the message 220 is displayed only for five seconds, for example. After the message 220 disappears, the user C can display a system image to send a request for watching a game image distributed by the user A to the management server 5 or the distribution server 9. When the user C shortly depresses a prescribed button on the input device 6, the reception section 104c receives the button operation, and supplies the operation information to the system image generation section 120c. The system image generation section 120c acquires the button operation information as a system-image display request, and calls the state information acquisition section 164c.

The state information acquisition section 164c acquires information indicating the states of the users from the management server 5, and provides the information to the system image generation section 120c. In the system image generation section 120c, the room image generation section 124c generates system image data indicating the state of the chat room that the user C is participating in, and supplies the system image data to the image processing section 140c. The image processing section 140c temporarily stores the system image data in the system buffer 154c, and generates a display image from the image data temporarily stored in the frame buffer 150c, and supplies the display image to the output device 4c. Specifically, the image processing section 140c generates the display image by combining the game image data temporarily stored in the game buffer 152c with the system image data temporarily stored in the system buffer 154c, and provides the display image to the output device 4c. Accordingly, the output device 4c outputs a display image in which the system image is superimposed on the game image.

FIG. 12 depicts an example of the system image 200 superimposed on a game image. The room image generation section 124c generates system image data on the basis of information indicating the states of the users acquired by the state information acquisition section 164c. The member displaying field 202 indicating the states of members in a chat room that the user has participated in is provided in the system image 200. The room image generation section 124c generates the member displaying field 202 including information regarding a plurality of room members (users) on the basis of the information indicating the states of the members. In FIG. 12, user icons, user names, the title of a game in progress, and information indicating the on/off states of microphones are displayed in the member displaying field 202. Further, information indicating whether share play is under execution, or the like may be included in the member displaying field 202.

The room image generation section 124c generates, on the basis of the information regarding the states of the plurality of users, the member displaying field 202 in which information regarding a user transmitting an image and information regarding a user transmitting no image are included in different regions. In an example of FIG. 12, the host display region 206 where information regarding a user transmitting an image is displayed and the non-host display region 208 where information regarding a user transmitting no image is displayed are provided in the system image 200. The host display region 206 and the non-host display region 208 are distinguishably provided as different regions, as depicted in FIG. 12. Accordingly, the user C can easily discern which member is performing screen sharing and which member is not performing screen sharing.

When the user C selects the display field of the user A by using the input device 6, the reception section 104c receives an operation of selecting the user transmitting an image. Then, the request transmission section 180c transmits a watching request including information for identifying the selected user to the management server 5. After receiving the watching request, the management server 5 transmits the watching request to the distribution server 9 in order to report that the user C desires to watch a game image of the user A. It is to be noted that the request transmission section 180c may send the watching request directly to the distribution server 9.

The first image acquisition section 188c decides a resolution of game image data to be received from the distribution server 9 according to the quality of the connection state between the communication section 102c and the distribution server 9, and adds the resolution of an image to be received to the watching request. That is, if the connection state is poor, the first image acquisition section 188c decides to receive low-resolution game image data. In the distribution server 9, the conversion section 312 generates image data at multiple pieces of resolutions, and the distribution section 314 distributes image data having a resolution that is appropriate for the connection state with respect to the information processing device 10c, to the information processing device 10c.

Here, it is assumed that game image data having a resolution of 1080p has been transmitted from the information processing device 10a of the user A, and the conversion section 312 has generated image data having a resolution of 720p, image data having a resolution of 540p, and image data having a resolution of 360p. When the connection state between the distribution server 9 and the information processing device 10c is good, the first image acquisition section 188c requests game image data having a resolution of 1080p, and the distribution section 314 distributes the game image data having a resolution of 1080p to the information processing device 10c. However, when the connection state is not good, the distribution section 314 distributes game image data having a resolution lower than 1080p.

Referring back to FIG. 9, the first image acquisition section 188c acquires game image data from the distribution server 9. In the information processing device 10c, a format for displaying a game image under screen sharing is determined. In the embodiment, three display formats: (1) full screen display, (2) picture-in-picture display, and (3) split-screen display are prepared. The user C previously determines any one of the display formats.

After receiving the image data from the first image acquisition section 188c, the image processing section 140c temporarily stores the image data in the system buffer 154c in accordance with the determined display format, generates a display image from the image data temporarily stored in the frame buffer 150c, and provides the display image to the output device 4c.

FIG. 13 depicts a display image in a full-screen display format. In a case where a full-screen display format is set, the image processing section 140c temporarily stores, in the system buffer 154c, image data acquired by the first image acquisition section 188c, generates a display image from the temporarily stored image data, and provides the display image to the output device 4c. Accordingly, the output device 4c performs full-screen display of a game image distributed by the user A.

FIG. 14 depicts a display example in a picture-in-picture display format. In a case where a picture-in-picture display format is set, the image processing section 140c reduces image data acquired by the first image acquisition section 188c and temporarily stores the reduced image data in the system buffer 154c, and generates a display image by combining the user C's game image data temporarily stored in the game buffer 152a with the user A's game image data temporarily stored in the system buffer 154c, and provides the display image to the output device 4c. Accordingly, the output device 4c outputs a display image in which a display region 230 for a game image distributed by the user A is superimposed on an image of a game that the user C is playing. It is to be noted that the position and the size of the display region 230 may be freely set by the user C in a picture-in-picture display format.

FIG. 15 depicts a display example in a split-screen display format. In a case where a split-screen display format is set, the image processing section 140c reduces image data acquired by the first image acquisition section 188c, and temporarily stores the reduced image data in the system buffer 154c, and reduces game image data generated by the execution section 110c, and temporarily stores the game image data in the game buffer 152c. The image processing section 140c generates a display image by combining the user C's game image data temporarily stored in the game buffer 152a with the user A's game image data temporarily stored in the system buffer 154c, and provides the display image to the output device 4c. In split-screen display, the screen of the output device 4c is split such that an image of a game that the user C is playing and a game image distributed by the user A are displayed side by side. It is to be noted that, in split-screen display, the size of a display region 232 may be freely set by the user C.

In picture-in-picture display or split-screen display, the image processing section 140c displays, on a part of the display, a game image distributed from the distribution server 9. A distributed image is displayed on a part of the display, so that the user C can watch a video of the user A's play while playing the title "combat field."

It is to be noted that, in picture-in-picture display or split-screen display, the resolution of the user A's game image does not need to be high because the image is reduced, and then, displayed on a part of the display. For this reason, the request transmission section 180c may request transmission of game image data having a resolution lower than 1080p. In this case, the distribution section 314 of the distribution server 9 distributes, to the information processing device 10c, image data at a resolution that is appropriate for the display mode in the information processing device 10c. Accordingly, the communication resources can efficiently be used.

Referring back to FIG. 3, when the user A shortly depresses a prescribed button on the input device 6 during a gameplay, the reception section 104a receives the button operation, and supplies the operation information to the system image generation section 120a. The system image generation section 120a acquires the button operation information as a system-image display request, and calls the state information acquisition section 164a.

The state information acquisition section 164a acquires information indicating the states of the users from the management server 5, and provides the information to the system image generation section 120a. The room image generation section 124a generates system image data indicating the state of a chat room that the user A is participating in, and supplies the system image data to the image processing section 140a. The image processing section 140a temporarily stores the system image data in the system buffer 154a, generates a display image from the image data temporarily stored in the frame buffer 150a, and provides the display image to the output device 4a.

FIG. 16 depicts an example of the system image 200 superimposed on a game image of the user A. Compared to the system image 200 depicted in FIG. 8, information indicating that the user C is watching a game image under screen sharing by the user A is displayed in the watching member display region 212. The user A sees the watching member display region 212, and can recognize that there is a member who is watching the game image that the user A has distributed.

As explained above, the share-play start button 210 is provided for allowing the user A to start share play which is the second sharing mode or the third sharing mode, and is an operation element for performing an operation to invite a member to a game in progress. When the user A operates the share-play start button 210 to select a member to perform share play with the user A, the invitation transmission section 172a transmits, to the management server 5, information indicating that the selected member is invited to share play. The management server 5 transmits the invitation to share play, to the information processing device 10 of the selected member. In the embodiment, the user A invites the user C to share play.

FIG. 17 depicts an example of a message 222 displayed on the output device 4c of the user C. It is to be noted that the image processing section 140c performs, in the display region 230, picture-in-picture display of a game image distributed by the user A.

The report generation section 122c generates system image data including the message 222 on the basis of a report sent from the management server 5, and supplies the system image data to the image processing section 140c. The image processing section 140c temporarily stores the system image data in the system buffer 154c, generates a display image from game image data and the system image data temporarily stored in the frame buffer 150c, and supplies the display image to the output device 4c. The user C sees the message 222, and recognizes that the user A has invited the user C to share play. It is to be noted that the report generation section 122c may perform a voice output to inform the user C that the user A has invited the user C to share play.

When the user C depresses a prescribed button on the input device 6 while the message 222 is displayed, the acceptance transmission section 184c transmits information for identifying the user C, and further, information indicating acceptance of the invitation to the management server 5.

It is to be noted that the message 222 is displayed only for five seconds, for example. After the message 222 disappears, the user C can display the system image to accept the invitation sent by the user A. When the user C shortly depresses a prescribed button on the input device 6, the reception section 104c receives the button operation, and supplies the operation information to the system image generation section 120c. The system image generation section 120c acquires the button operation information as a system-image display request, and calls the state information acquisition section 164c.

The state information acquisition section 164c acquires information indicating the states of the users from the management server 5, and provides the information to the system image generation section 120c. In the system image generation section 120c, the room image generation section 124c generates system image data indicating the state of the chat room that the user C is participating in, and supplies the system image data to the image processing section 140c. The image processing section 140c temporarily stores the system image data in the system buffer 154c, generates a display image from the game image data and the system image data temporarily stored in the frame buffer 150c, and provides the display image to the output device 4c.

FIG. 18 depicts an example of the system image 200 superimposed on a game image of the user C. Compared to the system image 200 in FIG. 12, information indicating that the user A has invited the user C to share play is displayed in a share-play host display region 216 since the user C has been invited to the share play. The user C sees the share-play host display region 216, and recognizes that the user A has invited the user C to the share play.

The share-play participation button 214 is provided for allowing the user C to join share play, and is an operation element for the user C to perform an operation of accepting the invitation sent by the user A. When the user C operates the share-play participation button 214, the acceptance transmission section 184c transmits information indicating acceptance of the invitation to a game play sent by the user A, to the management server 5. The management server 5 gives a report indicating that the user C has accepted the invitation to the information processing device 10a of the user A.

Referring back to FIG. 3, when the reception section 104a receives information indicating that the user C has accepted the invitation, the connection processing section 174a performs a process for establishing P2P connection with the information processing device 10c of the user C. After P2P connection is established, the second transmission processing section 170a transmits, to the P2P-connected information processing device 10c, streaming data on a game image that the image processing section 140a has read from the game buffer 152a. That is, the second transmission processing section 170a transmits a game image for a gameplay to the information processing device 10c of the user C having accepted the invitation, not via the distribution server 9. The streaming data to be transmitted may be identical to streaming data transmitted to the distribution server 9. It is to be noted that, if the connection state between the communication section 102a and the distribution server 9 is different from the connection state between the communication section 102a and the information processing device 10c, the streaming data may be transmitted at respective resolutions that are appropriate for the connection states.

FIG. 19 depicts an example of a system image displayed on the output device 4c of the user C. In the system image 200 in FIG. 18, when the user C operates the share-play participation button 214, a process for establishing P2P connection between the information processing device 10c and the information processing device 10a is executed on a background. Therefore, the system image generation section 120c generates a system image such as that depicted in FIG. 19, so that the user C recognizes that the connection is established until a gameplay is started.

It is to be noted that the image processing section 140c continuously displays, in the display region 230, a game image acquired from the distribution server 9 until a gameplay is ready. As a result, when waiting for start of a gameplay, the user C can watch the user A's gameplay. It is to be noted that the expression "until a gameplay is ready" means a time period from completion of P2P connection to transmission of streaming data on a game image from the second transmission processing section 170a.

It is to be noted that, also in a case where a distributed image is displayed not in a picture-in-picture display format but in a split-screen display, the image processing section 140c may continuously display, in the display region 232, a game image acquired from the distribution server 9 until a gameplay is ready. In a case where the user C operates the share-play participation button 214 while a distributed image is displayed on a part of the display, the image processing section 140c continuously displays the distributed image in this manner, so that the user C can watch an image distributed by the user A even when waiting for establishment of connection.

After P2P connection is established, the second transmission processing section 170a transmits a game image for gameplay to the information processing device 10c of the user C having accepted the invitation. In the information processing device 10c, the second image acquisition section 190c acquires a game image for gameplay from the information processing device 10a not via the distribution server 9.

FIG. 20 depicts an image of a game that the user C is playing. Since a message 224 is superimposed on the game image, the user C recognizes that share play is started. The image processing section 140c temporarily stores, in the system buffer 154c, image data acquired by the second image acquisition section 190c, generates a display image from the temporarily stored image data, and provides the display image to the output device 4c. Accordingly, the output device 4c displays the game image distributed by the user A. The user C performs share play while watching the displayed game image.

The present disclosure has been explained so far on the basis of the embodiment. This embodiment is illustrative. A person skilled in the art will understand that many modifications can be made to a combination of the constituent elements or a combination of the processes, and that such modifications are also included in the scope of the present disclosure.

### [Industrial Applicability]

The present disclosure is applicable to a technology for sharing an image among a plurality of users.

### [Reference Sings List]

1: Image sharing system
4: Output device
5: Management server
6: Input device
9: Distribution server
10a, 10b, 10c, 10d: Information processing device
20: Main power source button
100a, 100c: Processing section
102a, 102c: Communication section
104a, 104c: Reception section
110a, 110c: Execution section
120a, 120c: System image generation section
122a, 122c: Report generation section
124a, 124c: Room image generation section
140a, 140c: Image processing section
150a, 150c: Frame buffer
152a, 152c: Game buffer
154a, 154c: System buffer
160a, 160c: Sharing processing section
162a, 162c: State information transmission section
164a, 164c: State information acquisition section
166a: Transmission processing section
168a: First transmission processing section
170a: Second transmission processing section
172a: Invitation transmission section
174a: Connection processing section
180c: Request transmission section
182c: Invitation reception section
184c: Acceptance transmission section
186c: Image acquisition section
188c: First image acquisition section
190c: Second image acquisition section
300: Control section
302: Communication section
310: Image acquisition section
312: Conversion section
314: Distribution section

## Claims

1. An information processing device connecting to a management server that manages states of a plurality of members participating in one room, and a distribution server that distributes an image, the information processing device comprising:
a transmission processing section that transmits an image to the distribution server;
a state information acquisition section that acquires information indicating the states of the plurality of members from the management server; and
a room image generation section that, on a basis of the information indicating the states of the plurality of members, generates a member displaying field in which information regarding a member transmitting an image and information regarding a member transmitting no image are included in different regions, wherein
the room image generation section displays information indicating a member who is watching an image transmitted from the transmission processing section to the distribution server.

2. The information processing device according to claim 1,
wherein
the room image generation section displays an operation element through which an operation of inviting a member to a game in progress is performed.

3. The information processing device according to claim 2,
wherein
when the invited member accepts the invitation, the transmission processing section transmits an image for gameplay, not via the distribution server, to an information processing device of the member having accepted the invitation.

4. An image sharing method comprising:
a step of transmitting an image to a distribution server that distributes an image;
a step of acquiring, from a management server that manages states of a plurality of members participating in one room, information indicating the states of the plurality of members;
a step of displaying, on a basis of the information indicating the states of the plurality of members, a member displaying field in which information regarding a member transmitting an image and information regarding a member transmitting no image are included in different regions; and
a step of displaying information indicating a member who is watching an image transmitted to the distribution server.

5. A program for causing a computer to implement:
a function of transmitting an image to a distribution server that distributes an image;
a function of acquiring, from a management server that manages states of a plurality of members participating in one room, information indicating the states of the plurality of members;
a function of displaying, on a basis of the information indicating the states of the plurality of members, a member displaying field in which information regarding a member transmitting an image and information regarding a member transmitting no image are included in different regions; and
a function of displaying information indicating a member who is watching an image transmitted to the distribution server.
